# EUROPÄISCHE PATENTSCHRIFT

(11) **EP 0 451 499 B1**
(45) Veröffentlichungstag und Bekanntmachung des Hinweises auf die Patenterteilung: **21.07.1993**
(21) Anmeldenummer: 91103279.5
(22) Anmeldetag: 05.03.1991
(51) Int. Cl.: B60G 17/08, F16F 9/46

(54) **Regelbarer Schwingungsdämpfer für Kraftfahrzeuge**
Adjustable vibration absorber for motor vehicles
Amortisseur de vibrations réglable pour véhicules automobiles

(30) Priorität: 07.04.1990 DE 4011358
(43) Veröffentlichungstag der Anmeldung: 16.10.1991
(73) Patentinhaber: AUGUST BILSTEIN GMBH & CO. KG, 58240 Ennepetal (DE)
(72) Erfinder: Grün, Wolfgang, Dipl.-Ing., W-5828 Ennepetal (DE); Hölscher, Reinhard, Dr.-Ing., W-4796 Salzkotten (DE); Fütterer, Bodo, Dipl.-Ing., CH-6005 Luzern (CH); Mayer, Jürgen, CH-6072 Sachseln (CH); Wolf, Peter, Dipl.-Ing., CH-6005 Luzern (CH)

(56) Entgegenhaltungen:
- EP-A- 0 122 575
- EP-A- 0 224 815
- EP-A- 0 329 950
- DE-A- 2 911 768
- DE-A- 3 405 315
- FR-A- 2 606 109

## Beschreibung

Die Erfindung betrifft einen regelbaren Schwingungsdämpfer für Kraftfahrzeuge nach dem Oberbegriff des Patentanspruchs 1.

Um das Fahrverhalten eines Kraftfahrzeuges den gegebenen Straßenverhältnissen anpassen zu können, werden die Schwingungsdämpfer regelbar ausgeführt. Dabei werden den Dämpfventilen im Dämpferkolben zusätzliche regelbare Bypass-Ventile zugeordnet. Die Regelung kann über manuell zu betätigende Schalter erfolgen oder auch durch ein elektronisches Programm, das nach unterschiedlichen Eingangsdaten die Regelung der Schwingungsdämpfung vornimmt.

Die DE 34 05 315 A 1 zeigt einen regelbaren Schwingungsdämpfer für Fahrzeuge nach dem Oberbegriff des Anspruchs 1. Zum Verstellen eines Stellelementes, das den Querschnitt des Bypasses verändert, ist in der Kolbenstange ein Elektromotor, der als sogenannter Mikromotor bekannt ist, eingesetzt. Derartige Mikromotoren bauen jedoch immer noch verhältnismäßig groß, so daß die Kolbenstange wesentlich vergrößert werden muß. Dadurch fehlt dem Dämpfer ein entsprechendes Ausgleichsvolumen für die Aufnahme der Dämpferflüssigkeit, wodurch er ein erhöhtes Bauvolumen in der Länge und/oder im Durchmesser benötigt. Darüber hinaus besitzen die bekannten Elektromotoren den Nachteil, für automatische Regelvorgänge eine zu langsame Ansprechzeit zu haben.

Der Erfindung liegt die Aufgabe zugrunde, einen regelbaren Schwingungsdämpfer nach dem Oberbegriff des Anspruchs 1 derartig weiterzubilden, daß eine stufenlose hochdynamische Verstellung des Bypass-Querschnitts ermöglicht wird, wobei die Dämpfergröße nicht verändert werden muß.

Diese Aufgabe wird durch die kennzeichnenden Merkmale des Anspruchs 1 gelöst. Vorteilhafte Ausbildungen ergeben sich aus den Merkmalen der Ansprüche 2 bis 7. Durch die Ausbildung nach den Merkmalen von Anspruch 2 kann der Magnetfluß des Stators erhöht werden. Auf eine Ausbildung des Stators mit Blechen kann verzichtet werden, wenn die Merkmale des Anspruchs 3 berücksichtigt werden. Bei der Ausbildung des Erfindungsgegenstandes nach den Merkmalen des Anspruchs 6 wird erreicht, daß das Stellelement eine Bewegung in Längsrichtung des Schwingungsdämpfers durchführt. Nach einer Ausbildung mit den Merkmale des Anspruchs 7 kann die Größe des Bypass-Querschnitts direkt zum Regelsystem zurückgemeldet werden, ohne daß ein zusätzliches Sensorelement zum Schwingungsdämpfer benötigt wird.

Die mit der Erfindung erzielten Vorteile bestehen insbesondere darin, daß mit äußerst wenig Bauteilen, die eine sehr einfache Montage ermöglichen, ein Verstellsystem für die Verstellung der Bypass-Querschnittsöffnung erzielt wird. Die Ausbildung nach der Erfindung hat eine hohe Betriebssicherheit und ist durch die geringen bewegten Massen für ein hochdynamisches System einsetzbar. Weiterhin vorteilhaft kann ein regelbarer Schwingungsdämpfer auf einfache Weise in den gleichen Bauraum in Kraftfahrzeugen eingesetzt werden, der auch für nicht geregelte Stoßdämpfer vorgesehen ist. Das wirkt sich äußerst positiv auf den Einsatz für Großserienfahrzeuge aus.

Ein Ausführungsbeispiel der Erfindung ist in der Zeichnung dargestellt und wird im folgenden näher beschrieben. Es zeigen
Figur 1 einen Abschnitt eines Einrohrstoßdämpfers, bei dem das Stellelement des Bypasses eine rotierende Bewegung durchführt und
Figur 2 einen entsprechenden Abschnitt, bei dem das Stellelement des Bypasses eine Bewegung in Achsrichtung durchführt.

Der Stoßdämpfer 1 besitzt einen äußeren Zylinder 2, dessen Innenraum durch einen Kolben 3 in einen unteren Arbeitsraum 4 und einen oberen Arbeitsraum 5 unterteilt wird. Der Kolben 3 ist in bekannter Weise mit Dämpfventilen ausgebildet (nicht dargestellt) und ist über einen Gewindeabschnitt 6 und eine Mutter 7 mit einer Kolbenstange 8 verbunden. Die Kolbenstange besitzt eine zylindrische Ausnehmung 9, in die Elektromotor 10 und Stellelement 11 als ein Funktionsteil eingesetzt und fixiert werden. Der Elektromotor weist einen Stator 12 auf, der die Form eines dünnen Mantels besitzt und lediglich aus Statorwicklungen 13 besteht, die durch einen geeigneten Verbundkörper, der ein Kunststoffguß sein kann, verbunden werden. Der Stator ist mit dem Motorkopf 14 durch Vergießen verbunden. Durch den Motorkopf werden die Anschlußkabel 15 geführt, die dann durch die hohle Kolbenstange oder auf eine andere Weise dem Motorraum des Kraftfahrzeuges zugeleitet werden.

Im gezeigten Ausführungsbeispiel ist im Motorkopf 14 eine Laufwelle 16 zum Halten und Führen des Rotors 17 befestigt.

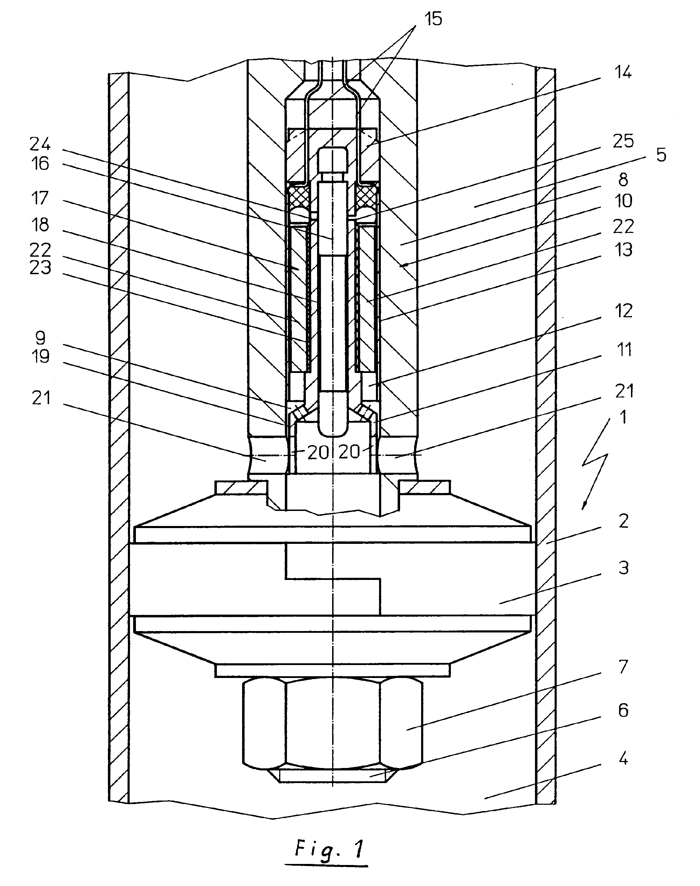

In der Ausbildung nach Figur 1 weist der Rotor 17 einen Tragkörper 18 auf. Einteilig mit diesem Tragkörper 18 ist als Stellelement 11 ein Ventilkorb 19 ausgebildet. Dieser Ventilkorb 19 besitzt eine oder mehrere Durchbrüche 20 und bildet mit Durchbrüchen 21 in der Kolbenstange 8 den querschnittsveränderbaren Bypass. Der Bypass-Querschnitt wird durch Verdrehen der Durchbrüche 20 im Stellelement 11 gegenüber den Durchbrüchen 21 in der Kolbenstange 8 verändert.

Mit dem Tragkörper 18 sind Permanentmagnete 22 über eine Vergußschicht 23 verbunden und bilden so den Rotor 17. Am Motorkopf 14 und am Tragkörper 18 sind Anschläge 24, 25 vorgesehen, die verhindern, daß der Rotor eine Bewegung von mehr als 360° ausführt.

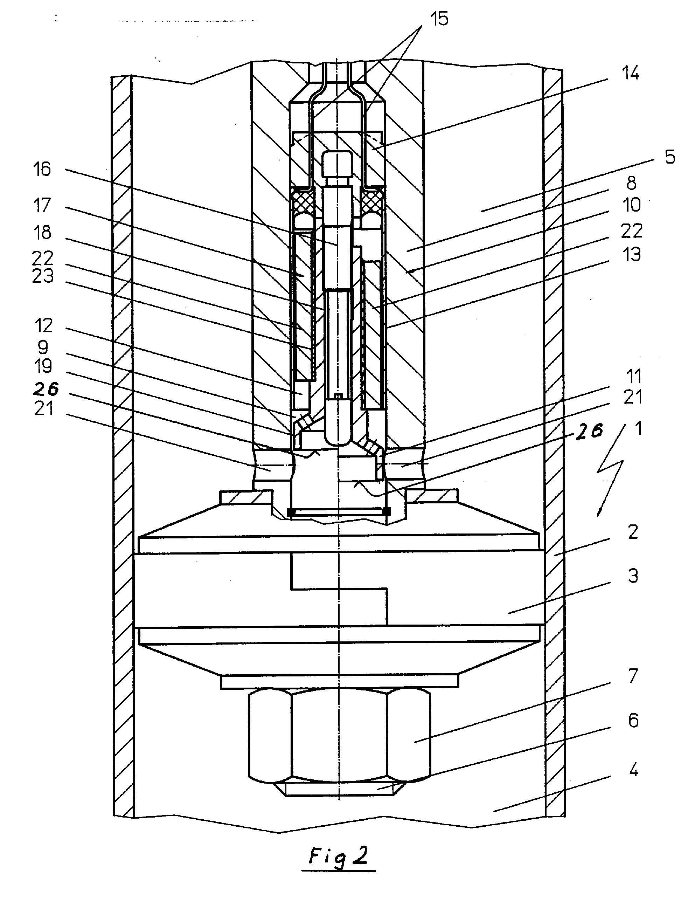

In der Ausbildung nach Figur 2 bewegt sich das Stellelement 11 in Kolbenstangenachsrichtung. Bei dieser Ausführungsform ist der Tragkörper 18 mit einem Innengewinde ausgebildet. Dieses Innengewinde wirkt mit einem Außengewinde auf der feststehenden Laufwelle 16 zusammen und bewirkt, daß Rotor 17 und Stellelement 11 eine Axialbewegung durchführen. Eine Steuerkante 26 am Stellelement 11 bewirkt ein stufenloses Öffnen bzw. Verschließen der Durchbrüche 21 in der Kolbenstange 8 und damit des Bypass-Querschnitts.
- 1: Stoßdämpfer
- 2: Zylinder
- 3: Kolben
- 4: unterer Arbeitsraum
- 5: oberer Arbeitsraum
- 6: Gewindeabschnitt
- 7: Mutter
- 8: Kolbenstange
- 9: Ausnehmung
- 10: Elektromotor
- 11: Stellelement
- 12: Stator
- 13: Statorwicklung
- 14: Motorkopf
- 15: Anschlußkabel
- 16: Laufwelle
- 17: Rotor
- 18: Tragkörper
- 19: Ventilkorb
- 20: Durchbruch
- 21: Durchbruch
- 22: Permanentmagnet
- 23: Vergußschicht
- 24: Anschlag
- 25: Anschlag
- 26: Steuerkante

## Patentansprüche

1. Regelbarer Schwingungsdämpfer für Kraftfahrzeuge, bestehend aus einem mit Dämpfflüssigkeit gefüllten Zylinder, in welchem ein mit Dämpfventilen versehener und mit einer Kolbenstange verbundener Kolben angeordnet ist, der den Zylinderinnenraum in zwei Arbeitsräume unterteilt und einen die Arbeitsräume miteinander verbindenden Bypass-Querschnitt aufweist, der durch ein Stellelement querschnittsveränderbar ist, wobei das Stellelement von einem in einer Ausnehmung der Kolbenstange angeordneten einen Stator mit einer Wicklung und einen Rotor aufweisenden Elektromotor betätigt wird, dadurch gekennzeichnet, daß die Statorwicklung (13) direkt in der Ausnehmung (9) der aus magnetisierbarem Material hergestellten Kolbenstange (8) und in einer Bohrung des Stators (12) ein drehbeweglich gelagerter, das Stellelement (11) antreibender mit Permanentmagneten (22) ausgerüsteter Rotor (17) angeordnet sind.

2. Regelbarer Schwingungsdämpfer nach Anspruch 1, dadurch gekennzeichnet, daß die Ausnehmung (9) der Kolbenstange (8) zylinderförmig ausgebildet ist.

3. Regelbarer Schwingungsdämpfer nach einem der Ansprüche 1 oder 2, dadurch gekennzeichnet, daß der Rotor (17) gegenüber dem Stator (12) des Elektromotors (10) höchstens um 360° verdrehbar ist.

4. Regelbarer Schwingungsdämpfer nach Anspruch 3, dadurch gekennzeichnet, daß eine mechanische mit Anschlägen (24, 25) versehene oder elektrische Verdrehsperre vorgesehen ist.

5. Regelbarer Schwingungsdämpfer nach einem der Ansprüche 1 bis 4, dadurch gekennzeichnet, daß Stellelement (11) und Rotor (17) als ein Teil ausgebildet sind.

6. Regelbarer Schwingungsdämpfer nach einem der Ansprüche 1 bis 5, dadurch gekennzeichnet, daß der Rotor (17) mit einem Gewinde ausgebildet ist und das drehfixierte Stellelement (11) über ein Gegengewinde axial bewegt.

7. Regelbarer Schwingungsdämpfer nach einem der Ansprüche 1 bis 6, dadurch gekennzeichnet, daß dem Rotor (17) oder dem Stellelement (11) ein Lagesensor zugeordnet ist.

## Claims

1. Adjustable vibration damper for motor vehicles, consisting of a cylinder which is filled with a damping fluid and in which a piston is arranged which is provided with damper valves and connected to a piston rod and which divides the interior of the cylinder into two working chambers and has a by-pass cross-section which connects the working chambers to one another and can be varied in cross-section by means of a control element, the control element being actuated by an electric motor which is arranged in a recess in the piston rod and has a stator with a winding and a rotor, characterised in that the stator winding (13) is arranged directly in the recess (9) of the piston rod (8) made from magnetisable material, and a rotor (17) which is equipped with permanent magnets (22), mounted so as to be rotatable and drives the control element (11) is arranged in a bore in the stator (12).

2. Adjustable vibration damper as claimed in claim 1, characterised in that the recess (9) in the piston rod (8) is of cylindrical construction.

3. Adjustable vibration damper as claimed in one of claims 1 or 2, characterised in that the rotor (17) is rotatable by at most 360° with respect to the stator (12) of the electric motor (10).

4. Adjustable vibration damper as claimed in claim 3, characterised in that a mechanical rotation lock with stops (24, 25) or an electrical rotation lock is provided.

5. Adjustable vibration damper as claimed in one of claims 1 to 4, characterised in that the control element (11) and the rotor (17) are constructed in one piece.

6. Adjustable vibration damper as claimed in one of claims 1 to 5, characterised in that the rotor (17) is constructed with a thread and the control element (11), which is fixed against rotation, moves axially via a counter-thread.

7. Adjustable vibration damper as claimed in one of claims 1 to 6, characterised in that a position sensor is associated with the rotor (17) or the control element (11).

## Revendications

1. Amortisseur de vibrations réglable pour véhicules, comprenant un cylindre rempli de liquide d'amortissement, dans lequel est prévu un piston pourvu de soupapes d'amortissement et lié à une tige de piston, piston qui divise le volume interne du cylindre en deux chambres de travail, et présente une section de dérivation reliant entre elles les chambres de travail, dont la section est modifiable au moyen d'un élément de réglage, tandis que l'élément de réglage est commandé par un moteur électrique prévu dans un logement de la tige de piston, présentant un stator bobiné et un rotor, caractérisé en ce que le bobinage du stator (13) est disposé directement dans le logement (9) de la tige de piston (8) réalisée en matériau magnétisable, et un rotor (17) pourvu d'aimants permanents (22), entraînant l'élément de réglage (11), est disposé à rotation dans un alésage du stator (12).

2. Amortisseur de vibrations réglable selon la revendication 1, caractérisé en ce que le logement (9) de la tige de piston (8) est de forme cylindrique.

3. Amortisseur de vibrations réglable selon la revendication 1 ou 2, caractérisé en ce que le rotor (17) peut tourner au plus sur 360° par rapport au stator (12) du moteur électrique (10).

4. Amortisseur de vibrations réglable selon la revendication 3, caractérisé en ce qu'il comprend un arrêt de rotation mécanique, avec butées (24, 25), ou électrique.

5. Amortisseur de vibrations réglable selon l'une des revendications 1 à 4, caractérisé en ce que l'élément de réglage (11) et le rotor (17) sont réalisés d'une pièce.

6. Amortisseur de vibrations réglable selon l'une des revendications 1 à 5, caractérisé en ce que le rotor (17) est pourvu d'un filetage, et l'élément de réglage (11) fixe en rotation est déplacé axialement par l'intermédiaire d'un contre-filetage.

7. Amortisseur de vibrations réglable selon l'une des revendications 1 à 6, caractérisé en ce qu'un détecteur de position est associé au rotor (17) ou à l'élément de réglage (11).
